# EUROPÄISCHE PATENTANMELDUNG

(11) **EP 2 295 280 A2**
(43) Veröffentlichungstag der Anmeldung: **16.03.2011**
(21) Anmeldenummer: 10006896.4
(22) Anmeldetag: 03.07.2010
(51) Int. Cl.: B60L 11/18

(54) **Verfahren zum Betrieb eines Kraftfahrzeuges an der Haustechnik eines Gebäudes**

(30) Priorität: 09.07.2009 DE 102009032458
(71) Anmelder: Huber, Gerhard, 88142 Wasserburg (DE); Jung,, Hans-Friedrich, 75305 Neuenbürg (DE)
(72) Erfinder: Huber, Gerhard, 88142 Wasserburg (DE); Jung,, Hans-Friedrich, 75305 Neuenbürg (DE)
(74) Vertreter: Riebling, Peter

(57) **Zusammenfassung**

Verfahren zum Betrieb eines straßentauglichen Kraftfahrzeuges an der Haustechnik eines Gebäudes mit einer Andockstation, welche Anschlüsse am Kraftfahrzeug mit dem Gebäude verbindet, wobei das Kraftfahrzeug als Hybridfahrzeug ausgebildet ist und mindestens einen Verbrennungsmotor und einen Elektromotor mit einer Batterie aufweist, dass das Hybridfahrzeug für die Wärme- und Kraft (Strom) -Erzeugung stationär in die Haustechnik eines Gebäudes eingekoppelt wird, und dass das Hybridfahrzeug für die Wärme- und Stromversorgung des Gebäudes verwendet wird.

## Beschreibung

Die Erfindung betrifft ein Verfahren zum Betrieb eines Kraftfahrzeuges und eine Vorrichtung, mit der das Kraftfahrzeug an die Haustechnik eines Gebäudes angekoppelt werden kann.

Grundsätzlich ist es bekannt, Verbrennungsmotoren als Wärme- und Kraftquelle für ein Blockheizkraftwerk (BHKW) einzusetzen.
Hierzu wird beispielsweise auf die DE 10 2006 040 147 A1 verwiesen, die eine Wärmekraftmaschine in der Verwendung als Blockheizkraftwerk beschreibt, wobei jedoch nicht ein straßentaugliches Hybridfahrzeug gezeigt ist.

In der JP 10159652 A wird die Verwendung eines straßentauglichen Kraftfahrzeuges beschrieben, welches im stationären Zustand an ein Gebäude angekoppelt wird und hierbei mit Stadtgas betrieben wird. Der Betrieb des Fahrzeuges soll zu einer Aufheizung des mit dem Fahrzeug mitgeführten Warmwassertanks führen, welches Warmwasser dann über eine entsprechende Ankopplung an die Haustechnik in das Haus hineingeliefert wird. Die Art und Ausbildung der Ankoppelstation ist jedoch nicht gezeigt.

Nachteil dieser Anordnung ist jedoch, dass das straßentaugliche Hybridfahrzeug nur einen einzigen Betriebsmodus kennt, der mit dem Betrieb mit Stadtgas zum Zweck der Erwärmung des mitgeführten Warmwasserspeichers dient, um so aufgeheiztes Wasser in ein Haus zu liefern.

In der DE 20 2007 007 544 U1 wird ein straßentauglicher PKW gezeigt, der mit seiner Antriebsachse auf einem Rollenstand einen Rollenantrieb antreibt, dem ein Generator zugeordnet ist. Nachteil dieser Anordnung ist jedoch die aufwändige Anordnung eines Rollenstandes und der schlechte mechanische Wirkungsgrad beim Betrieb.

In der DE 101 07 420 A1 wird eine duale Nutzung der in einem straßentauglichen Kraftfahrzeug angeordneten Brennstoffzellen beschrieben. Die Brennstoffzellen sollen wahlweise für den Betrieb des Kraftfahrzeuges und für den Betrieb einer Hausenergie-Anlage nutzbar sein.

Der Erfindung liegt deshalb ausgehend von der JP 10159652 A die Aufgabe zugrunde, ein Verfahren zum Betrieb eines Kraftfahrzeuges sowie eine dazugehörende Vorrichtung so weiterzubilden, dass ein handelsübliches, straßentaugliches Kraftfahrzeug in vielfältiger Weise in verschiedenen Betriebsmodi an eine Haustechnik angekoppelt werden kann.

Zur Lösung der gestellten Aufgabe ist die Erfindung durch die technische Lehre des Anspruches 1 gekennzeichnet.

Die Erfindung geht hierbei von einem üblichen straßentauglichen Hybridfahrzeug aus, welches für den Fahrbetrieb einen Verbrennungsmotor und einen Elektromotor verwendet, wobei Letzterer auch als Generator betrieben werden kann. Der Elektromotor wird mit einer im Fahrzeug angeordneten Batterie angetrieben.

Der Verbrennungsmotor des Fahrzeugs ersetzt dabei die konventionelle Brennertechnik (Öl, Gas etc.) mit dem bekannten Vorteil, dass neben Wärme auch Strom durch einen an den Verbrennungsmotor des Hybridfahrzeugs angekoppelten Generator/Motor erzeugt wird.

Die bei konventionellen BHKW's anfallenden Wartungsarbeiten sind schwer durchzuführen und kostenintensiv, da die Anlagen meist in den Kellerräumen von Gebäuden untergebracht sind. Ein Ölwechsel oder gar der Austausch eines Verbrennungsmotors ist mit großem Aufwand verbunden.

Dagegen kann das erfindungsgemäße Fahrzeug wie ein normales konventionelles Fahrzeug zu Wartungszwecken in die Werkstatt gefahren werden. Die vorhandene Infrastruktur (Einrichtungen, Ersatzeile, Ausbildungsstand des Montagepersonals etc.) der Werkstätten ist bestens geeignet die Wartungsarbeiten fachgerecht und kostengünstig durchführen zu können. Vorzugsweise fährt das Fahrzeug rein elektrisch und damit emissionsfrei in die Werkstatt. Für einen eingeschränkten Radius kann das Fahrzeug auch ohne jegliche Emission in beispielsweise Ballungszentren vollelektrisch betrieben werden.

Der Wirkungsgrad moderner Wärme-Kraftmaschinen liegt bei ca. < 40%. D.h. ca. > 60% des Energieinhalts des verwendeten Kraftstoffs wird im Wesentlichen in Wärme umgesetzt. Für gewisse Fahrzustände, vor allem beim Beschleunigen und Verzögern des Fahrzeuges, z. B. in Ballungszentren, kann die Ergänzung der Wärme-Kraftmaschine durch einen Elektro-Motor/Generator (Hybridantrieb) Wirkungsgradvorteile bringen, also Kraftstoffsparender und Co₂- ärmer betrieben werden.

Gelingt es nun, dieses Fahrzeug, wenn es nicht als mobiles Gerät benötigt wird, für die Wärme- und Kraft (Strom) -Erzeugung stationär in die Haustechnik einzukoppeln, dann kann ein PKW bequem für die Wärme- und Stromversorgung, z. B. für ein Ein- bzw. Mehrfamilienhaus, zusätzliche Verwendung finden. In modernen, energiesparenden Häusern, die sowohl Solarthermie (Warmwasserbereitung) als auch PV (Photovoltaik) und/oder Windenergie und/oder Wärmepumpen verwenden, besitzen alle einen großzügig ausgelegten Wärmespeicher. Hier kann das Kühlwassersystem des PKW eingekoppelt werden und liefert die benötigte Wärme in den Wärmespeicher und durch den Generator elektrische Energie in das Hausnetz. Werden nun diese PKW mit Gas (NG) oder Bio-Kraftstoffen betrieben, dann ergeben sich weitere Vorteile durch die Verwendung nachwachsender Rohstoffe bzw. durch die Anwendung das Einspeisevergütungs-EEG (erneuerbare Energien Einspeisegesetz).

Beim Betreiben des Fahrzeuges an der Haustechnik des Gebäudes kann der Motor vollständig CO₂-frei betrieben werden, wenn das entstehende Abgas durch einen Kompressor mit Zwischenkühler verflüssigt und in Gasflaschen abgefüllt wird. Diese Technik, die auch für Großkraftwerke im Versuchsstadium untersucht wird, wäre deshalb vorstellbar, da das so verflüssigte CO₂ in diesen Kreislauf eingebracht werden könnte. Für mobile Anlagen wie Fahrzeuge ist wegen der Gewichtsproblematik eine "on board Verflüssigung" sehr viel schwieriger darstellbar, als im stationären Fall der Haustechnik. Damit wäre ein vollständig CO₂-freier Betrieb der Anlage denkbar.

Die Vorteile gegenüber bestehender stationärer KWK-Technik sind:
Die sehr wünschenswerte Verbreitung von KWK's bzw. BHKW's wegen der wirtschaftlichen und ökologisch sinnvollen Verwendung von Kraftstoffen sowohl für die Wärme- als auch für die Kraft (Strom)-Erzeugung scheitert bis heute meist daran, dass diese Anlagen äußerst wartungsintensiv und damit meist viel teurer im Betrieb sind als bei der Projektierung der Anlagen gedacht. Hinzu kommen Störungen, die gegenüber herkömmlichen kontinuierlichen Brennern wegen der komplexeren Anlagenstruktur in der Regel häufiger sind.

Die Infrastruktur für die Wartung von PKW-Antriebssystemen (Motor+Generator+Umrichter) ist heute schon bestens ausgebaut und kann durch die Mobilität des Fahrzeugs gut und kostengünstig wahrgenommen werden. Serviceleistungen im Haus können entfallen oder beschränken sich auf eine überschaubare einfache Technik.

Ein größerer Tank für die Heizung kann entfallen, da das Fahrzeug wie bisher zum Tanken fahren kann, vorzugsweise rein elektrisch und damit emissionsfrei, und mit diesem Kraftstoff dann auch die Heizung mit Wärme und das Netz mit Strom versorgt. Der schon bekannte Vorteil der KWK's durch die dezentrale Versorgung entfallende Durchleitungsverluste des Stroms aus den Großkraftwerken kann als zusätzlicher Vorteil voll ausgespielt werden.

Der Betrieb des Verbrennungsmotors im stationären, im in das Haus-Heizungs- und -Stromnetz eingekoppelten Zustand kann als sehr schonend und der Motorlebensdauer zugute kommend bezeichnet werden.

### Andockvorgang:

Ähnlich wie bei einer Fernbedienung für das Öffnen des Garagentors wird der Andockvorgang, der dann vollautomatisch ohne Zutun des Fahrers erfolgen kann, eingeleitet. Die Vorderräder des Fahrzeugs müssen lediglich in die Radführung eingespurt werden. Das Fahrzeug wird, wenn noch nicht geschehen, in den Elektromodus geschaltet. Sobald das Fahrzeug vollständig mit allen 4 Rädern auf den Radführungen steht, wird bei einem gewissen Sicherheitsabstand im "Schleichgang" weitergefahren, bis die Schnellkupplungen "angedockt" haben. Dann kommt das Fahrzeug zum Stehen. In einer anderen Ausführung kommt das Fahrzeug kurz vor dem Andocken zum Stehen und die hausseitige Andockschiene wird mit einem Aktuator (elektrisch, hydraulisch, pneumatisch oder mechanisch) nach vorhergehendem "Pilotieren" über konische Ausrichtstifte vorsichtig angedockt. Um Ungenauigkeiten, wie Schiefstand des Fahrzeugs, Reifendruck- bzw. Durchmesseränderung und ähnlichem Rechnung zu tragen können die haus- oder fahrzeugseitige Andockschiene oder beide elastisch aufgehängt sein. Jetzt ist das Fahrzeug mit den hausseitigen Anschlüssen verbunden, die da sind:

### Strom Ein/Aus:

Bidirektional deshalb, weil zunächst der Ladezustand der Fahrzeugbatterie überprüft wird und ggf. vor Lieferung von Strom in das Hausnetz die Fahrzeugbatterie aufgeladen wird. Ist der Ladezustand der Fahrzeugbatterie wieder ausreichend, kann Strom ins Hausnetz über einen entsprechenden Wandler/Umrichter, der die Bordspannung des Fahrzeugs an die Gegebenheiten des Hausnetzes anpaßt, geliefert werden.
Umgekehrt können die ans Netz angeschlossenen Batterien (vieler moKWK's) als Puffer für das durch Stromspitzen (Wind-Solar-Kraftwerk) unausgeglichene Stromnetz dienen und somit einen Beitrag zur Netzstabilisierung liefern.

### Steuerung Ein/Aus:

Über das Steuerkabel werden Informationen von der "Haussteuerung" über den Bedarf an Wärme und Strom an die "Motorsteuerung" geliefert. Die "Motorsteuerung" liefert an die "Haussteuerung" Informationen, wie: Störung, Wartungsintervall, Betriebsstunden, abgegebene el. Leistung, Treibstoffvorrat, etc.

### Warmwasserzu- und Ablauf:

Dieser Wasserkreislauf ist frostsicher bis zum Wärmetauscher, in dem die Wasserkreisläufe (Heizungswasser, Brauchwasser, Wasser für Solartherme etc.) zusammenkommen

### Abgas:

Vorzugsweise wird das Abgas so nachbehandelt, dass es verflüssigt in Gasflaschen abgefüllt werden kann. Eine weitere Alternative ist das Ausleiten des Abgases in einen Kamin am oder im Gebäude.

Wesentliches Merkmal der Erfindung ist demzufolge, dass dem Hybridfahrzeug eine Andockstation zugeordnet ist, die im Wesentlichen aus einer fahrzeugseitigen Andockschiene und aus einer stationären, hausseitigen Andockschiene besteht.

Die Andockstation besteht bevorzugt aus einander zugeordneten Schnellkupplungen, wobei es gleichgültig ist, welcher Teil der Schnellkupplung (männlich oder weiblich) sich auf der stationären und welcher Teil der Schnellkupplung sich auf der Fahrzeugseite befindet.
Wichtig ist jedenfalls, dass mindestens eine Stromzu- und Ableitung vom Fahrzeug in das Haus erfolgt und ebenso einen Kühlwasserzulauf und Kühlwasserablauf in das Haus erfolgt, um von dem Hybridfahrzeug eine entsprechende Wärmeleistung abzuführen und in Form eines Warmwasserstroms der Haustechnik zuzuführen.

Hierbei ist es gleichgültig, in welcher Weise die Steuerung der fahrzeugseitigen Technik erfolgt. Die Steuerung kann hierbei bevorzugt über Steuerungsleitungen erfolgen. Selbstverständlich ist es auch möglich, solche Steuerungsleitungen entfallen zu lassen und stattdessen eine drahtlose Steuerung vorzusehen.

Ebenso ist im Rahmen der vorliegenden Erfindung nicht näher beschrieben, auf welcher Weise der vom Fahrzeug gelieferte Strom (in der Regel ein Dreiphasen-Drehstrom) in die Haustechnik eingespeist wird.

Es kann hierbei vorgesehen sein, dass der hierfür erforderliche Wechselrichter entweder auf der Fahrzeugseite oder auf der Hausseite angeordnet ist.

Wichtig bei allen Ausführungsbeispielen der Erfindung ist die universelle Verwendung eines Hybridfahrzeuges, welches erstmals als straßentaugliches Fahrzeug beschrieben und angewendet wird und welches gleichzeitig auch zur Erzeugung von Heißwasser und Strom für eine Haustechnik verwendet werden kann. Dies ist neu und war bisher noch nicht beschrieben worden.

Für die Ausbildung dieses Fahrzeuges als Hybridfahrzeug gibt es eine Reihe von Möglichkeiten, die dem Fachmann bekannt sind. So ist es beispielsweise möglich, das Hybridfahrzeug mit zwei Kupplungen auszurüsten, was bedeutet, dass bei der Betätigung der einen Kupplung der Verbrennungsmotor vom Antriebsstrang getrennt wird und nur noch der Elektromotor auf den Antriebsstrang und damit auf das Fahrzeug wirkt, sodass damit auch vorgesehen ist, dass dieses Hybridfahrzeug auf der Straße als Elektromotorfahrzeug betrieben werden kann, wobei auch eine Rückspeisung der Bremsenergie über den Elektromotor, der dann als Generator arbeitet, in die Batterie vorgesehen ist.

Alle diese Betriebsarten können auch stationär vorgesehen werden, d. h. für den Fall, dass das Hybridfahrzeug stationär an die Haustechnik angekoppelt ist.

Die zweite Kupplung ist notwendig, wenn der Verbrennungsmotor den Generator im Fahrzeug antreiben soll und das Fahrzeug hierbei in der Andockstation angedockt ist. In diesem Fall liefert der Verbrennungsmotor über den Antrieb des Generators unmittelbar Strom in die Haustechnik hinein.

Die Erfindung ist nicht darauf beschränkt, dass die fahrzeugseitige Andockschiene an der Frontseite des Fahrzeuges angeordnet ist. In einer anderen Ausgestaltung der Erfindung kann es vorgesehen sein, dass diese Andockschiene am Unterboden, an der Seite oder am Dach sowie auch an der Rückseite des Fahrzeuges angeordnet ist. Maßgebend ist, dass das Fahrzeug im Hybridbetrieb (Verbrennungsmotor- oder Elektromotorbetrieb) auf die Radführung gefahren wird und dann auf der Radführung entlang rollend mit seiner Andockschiene an die stationäre Andockschiene angekuppelt wird. Hierbei wird vorausgesetzt, dass die Schnellkupplungen der einzelnen Medienleitungen betriebssicher arbeiten und die erforderlichen Verbindungen herstellen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Unteransicht auf ein Hybridfahrzeug auf einer Radführung kurz vor dem Ankoppeln an die Haustechnik
- Figur 2:: perspektivisch das Fahrzeug nach Figur 1 mit Darstellung weiterer Einzelheiten
- Figur 3:: schematisiert die Verbindung der fahrzeugseitigen Medienleitungen über die Andockstation mit den stationären Medienleitungen
- Figur 4:: schematisiert die verschiedenen Betriebsarten, die erfindungsgemäß mit dem Hybridfahrzeug vorgesehen sind

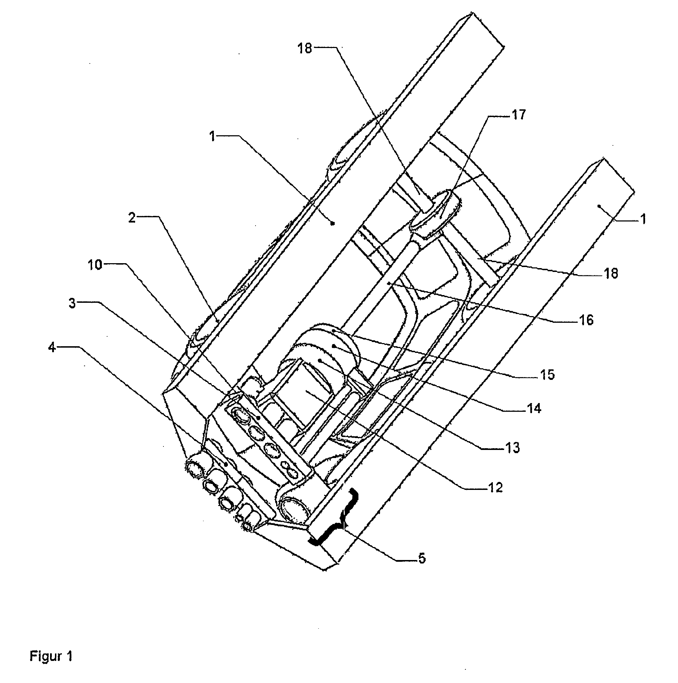

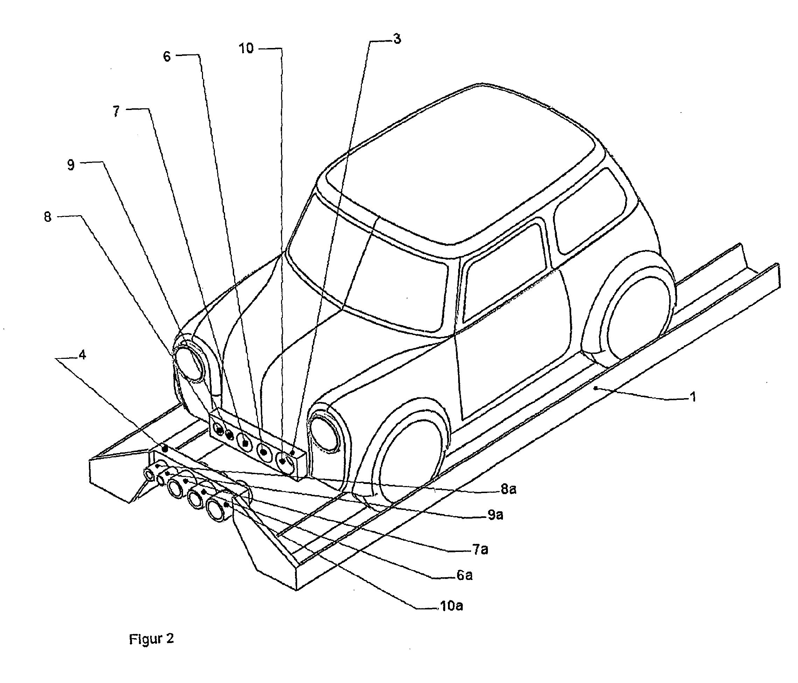

In den Figuren 1 und 2 ist allgemein eine Radführung 1 dargestellt, die aus zwei Auffahrschienen besteht, auf welches das Hybridfahrzeug 2 auffährt und mit den Rädern so geführt wird, dass seine fahrzeugseitige Andockschiene 3 über die fahrzeugseitig angeordneten Schnellkupplungshälften mit der stationär angeordneten Andockschiene 4 gekoppelt werden kann.

Die Andockschienen 3, 4 bilden demnach eine Andockstation 5, die aus der fahrzeugseitigen Andockschiene 3 und der stationären Andockschiene 4 gebildet ist. Hierbei werden Schnellkupplungen 11 verwendet, die die gas- und flüssigkeitsdichten Verbindungen mit den verschiedenen Medienleitungen des Fahrzeuges in Richtung auf die Haustechnik und zurück ausbilden.

In Figur 1 und 2 ist dargestellt, dass das Fahrzeug einen Verbrennungsmotor 12 aufweist, der einen Kühlwasserzulauf 6 und einen Kühlwasserablauf 7 mit Wärme versorgt. Gleichzeitig wird über dieses Kühlwasser der Verbrennungsmotor 12 gekühlt. Sobald der Verbrennungsmotor 12 angetrieben wird, wird somit das Kühlwasser aufgeheizt und kann über die Andockstation 5 in die Haustechnik eingespeist werden.

Aus der Figur 1 ergibt sich, dass dem Verbrennungsmotor noch zwei Kupplungen zugeordnet sind, nämlich eine Kupplungsglocke der Kupplung 1 (13). Mit dieser Kupplung 13 kann der Verbrennungsmotor allein gefahren werden und der elektrische Generator bzw. Elektromotor 14 von dem Verbrennungsmotor 12 entkoppelt werden.

Mit der zweiten Kupplung (15) wird im stationären Zustand der Verbrennungsmotor 12 und der Generator 14 vom Fahrzeug (Kardanwelle 16) entkoppelt.

Der Antriebsstrang wird im eigentlichen gebildet aus der Hintereinanderschaltung der Kupplung 13 mit der Kupplung 15, wobei die Kupplung 15 dann mit ihrer Abtriebsseite mit der Kardanwelle 16 drehfest verbunden ist, welche Kardanwelle 16 mit dem Hinterachsgetriebe 17 zusammenwirkt. Dieses Hinterachsgetriebe 17 wirkt auf die Antriebswellen 18. Falls erforderlich wird ein hier nicht näher dargestelltes Getriebe in den Antriebsstrang eingeführt um die Übersetzung anzupassen.

Beim Antrieb des Generators/Motors 14 über den Verbrennungsmotor 12 wird im Generator 14 Strom erzeugt, der über die Stromzu- und -ableitungen 8 und die Andockstation 5 in die Haustechnik hineingeliefert wird.

Zur Steuerung der verschiedenen Elemente im Hybridfahrzeug 2 sind Steuerungsleitungen 9 vorgesehen, welche von einem hausseitig angeordneten Steuerungscomputer über die Andockstation 5 in das Fahrzeug 2 hineinführen und die verschiedenen Steuerungsvorgänge ausführen.

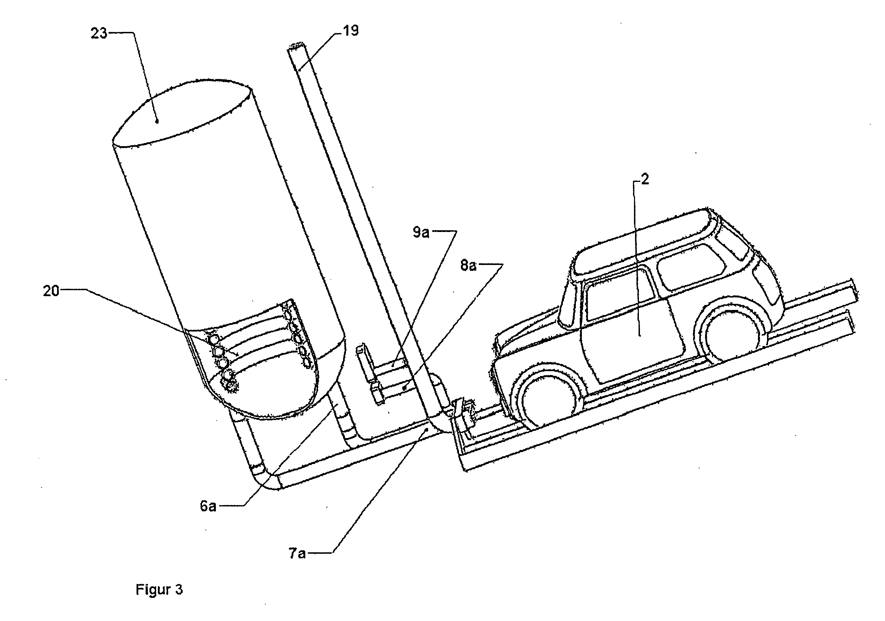

Weil während des Betriebs des Verbrennungsmotors 12 auch Abgas anfällt, wird dieses Abgas über eine Abgasleitung 10 und die dortige Andockstation 5 in die Haustechnik gemäß Figur 3 eingeführt und dort einem stationären Kamin 19 zugeführt.

Gemäß der allgemeinen Beschreibung kann auch dieses CO₂-Abgas verflüssigt werden.

Auf der Hausseite ist gemäß Figur 3 ein Wärmetauscher 20 vorhanden, in den die hausseitigen Warmwasserzu- (7a) und -ablauf (6a) einmünden, die einen Warmwasserspeicher 23 aufladen.

Die Bezugszeichen in den Zeichnungen sind so ausgeführt, dass alle hausseitigen Anschlüsse mit dem Kleinbuchstaben a versehen sind, während bei den entsprechenden fahrzeugseitigen Medienleitungen der Buchstabe a fehlt.

Somit gelten für die entsprechenden Funktionen auf der Fahrzeugseite und der Hausseite die gleichen Bezugszeichen, nur dass die Teile auf der Hausseite noch mit dem Buchstaben a versehen sind. Z. B.: Kühlwasser-Ablauf (Fahrzeug) 7 entspricht Warmwasser-Zulauf (Haus) 7a

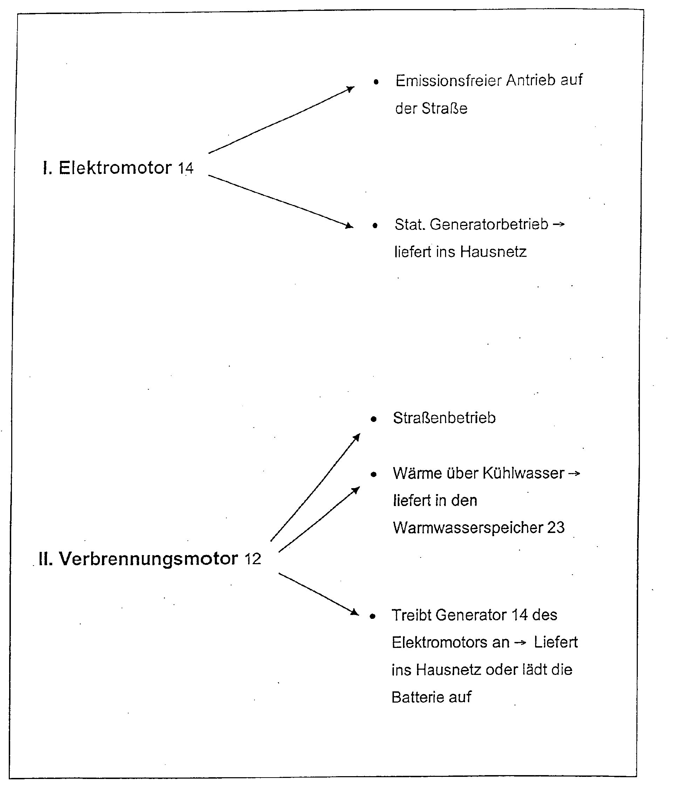

In Figur 4 sind die verschiedenen Betriebszustände des erfindungsgemäßen Hybridfahrzeuges dargestellt.

In dem Betriebszustand I ist dargestellt, dass der Elektromotor für einen emissionsfreien Antrieb auf der Straße vorgesehen ist, kann von der fahrzeugseitigen Batterie Strom in das Hausnetz über einen Umrichter geliefert werden.

In dem Betriebszustand II in Figur 4 ist dargestellt, dass der Verbrennungsmotor in üblicher Weise einen Straßenbetrieb des Hybridfahrzeuges ausführt und dass in einem anderen Betriebszustand (stationärer Betriebszustand) beim Antrieb des Verbrennungsmotors Wärme über das Kühlwasser eingetragen wird, welches in der vorher beschriebenen Weise über den Wärmetauscher 20 den Warmwasserspeicher 23 auflädt.

Ebenso ist als dritter Betriebszustand dargestellt, dass der Verbrennungsmotor 12 den Generator 14 des Elektromotors drehend antreibt und dieser dann Strom über die Stromzu- und Stromableitungen 8 in das Hausnetz liefert.

Es versteht sich von selbst, dass der Begriff Generator/Motor das gleiche Bauteil meint, es wird nur stets entweder im Generatorbetrieb oder im Motorbetrieb betrieben.

Mit der technischen Lehre der Erfindung besteht der Vorteil, dass mit dem erfindungsgemäßen Verfahren ein Hybridfahrzeug, welches an und für sich nur für den Straßenbetrieb vorgesehen ist, nun einem Mehrfachnutzen zugeführt werden kann. Der Hauptnutzen des erfindungsgemäßen Verfahrens ist, dass ohnedies das Hybridfahrzeug gewartet werden muss, weil es am Straßenbetrieb teilnimmt. Die Probleme, die vorher beim Stand der Technik bei der Wartung von BHKW- oder KWK-Anlagen bestanden, lagen darin, dass unausgebildete oder schlecht ausgebildete Techniker Wartungen an komplizierten Verbrennungsmotoren ausführen mussten.

Dieses Problem ist nun mit dem Verfahren der Erfindung vermieden, denn die ohnedies in üblichen Wartungsintervallen zu wartenden Hybridfahrzeuge können nun weiterhin von den dafür spezialisierten Kraftfahrzeugwerkstätten gewartet werden. Sie werden deshalb immer in einem straßentauglichen und betriebsfähigen Zustand gehalten. Es handelt sich um einen entscheidenden Beitrag für eine neuartige Kraft-Wärme-Kopplung, denn es werden herkömmliche Hybridfahrzeuge für eine derartige Kraft-Wärme-Kopplung verwendet, was bisher noch nicht bekannt war. Diese Hybridfahrzeuge werden auch als straßentaugliche Kraftfahrzeuge eingesetzt, wodurch sich ein Doppelnutzen ergibt.

### Zeichnungslegende

- 1: Radführung
- 2: Hybrid-Fahrzeug
- 3: Andockschiene (Fahrzeug)
- 4: Andockschiene (stationär)
- 5: Andockstation
- 6: Kühlwasserzulauf
- 7: Kühlwasserablauf
- 8: Stromzu- und -ableitung
- 9: Steuerungsleitungen
- 10: Abgasleitung
- 11: Schnellkupplung
- 12: Verbrennungsmotor
- 13: Kupplungsglocke Kupplung 1
- 14: Generator/Motor
- 15: Kupplung 2
- 16: Kardanwelle
- 17: Hinterachsgetriebe
- 18: Antriebswelle
- 19: Stationärer Kamin
- 20: Wärmetauscher
- 21: Vorlaufleitung
- 22: Rücklaufleitung
- 23: Warmwasserspeicher

## Patentansprüche

1. Verfahren zum Betrieb eines straßentauglichen Kraftfahrzeuges an der Haustechnik eines Gebäudes mit einer Andockstation (5), welche Anschlüsse am Kraftfahrzeug mit dem Gebäude verbindet, **dadurch gekennzeichnet, dass** das Kraftfahrzeug als Hybridfahrzeug ausgebildet ist und mindestens einen Verbrennungsmotor und einen Elektromotor mit einer Batterie aufweist, dass das Hybridfahrzeug (2) für die Wärme- und Kraft (Strom) -Erzeugung stationär in die Haustechnik eines Gebäudes eingekoppelt wird, und dass das Hybridfahrzeug für die Wärme- und Stromversorgung des Gebäudes verwendet wird.

2. Verfahren nach Anspruch 1, **dadurch gekennzeichnet, dass** in den Wärmespeicher (23) des Gebäudes das Kühlwassersystem des Hybridfahrzeuges (2) eingekoppelt wird und dass der Generator/Motor des Hybridfahrzeuges (2) elektrische Energie in das Hausnetz liefert.

3. Verfahren nach Anspruch 1 oder 2, **dadurch gekennzeichnet, dass** beim Betreiben des Hybridfahrzeuges (2) an der Haustechnik des Gebäudes der Motor vollständig CO₂-frei betrieben wird.

4. Verfahren nach einem der Ansprüche 1 bis 3, **dadurch gekennzeichnet, dass** das Hybridfahrzeug (2) über einen Andockvorgang, der vollautomatisch ohne Zutun des Fahrers erfolgt, an das Gebäudesystem mittels einer Andockstation (5) angedockt wird.

5. Verfahren nach einem der Ansprüche 1 bis 4, **dadurch gekennzeichnet, dass** die Vorderräder des Fahrzeugs (2) in die Radführung der Andockstation (5) eingespurt werden, dass das Fahrzeug (2) in den Elektromodus geschaltet wird. sobald das Fahrzeug vollständig mit allen 4 Rädern auf den Radführungen (1) steht, und dass es bei einem gewissen Sicherheitsabstand zu der Andockschiene (4) der Andockstation (5) im "Schleichgang" weitergefahren wird, bis die Schnellkupplungen (11) "angedockt" haben.

6. Verfahren nach einem der Ansprüche 1 bis 5, **dadurch gekennzeichnet, dass** nach dem Andocken zunächst der Ladezustand der Fahrzeugbatterie überprüft wird und ggf. vor Lieferung von Strom in das Hausnetz die Fahrzeugbatterie aufgeladen wird, und dass erst nachdem der Ladezustand der Fahrzeugbatterie wieder ausreichend ist, der Strom ins Hausnetz über einen entsprechenden Wandler/Umrichter, der die Bordspannung des Fahrzeugs an die Gegebenheiten des Hausnetzes anpaßt, geliefert wird.

7. Verfahren nach einem der Ansprüche 1 bis 6, **dadurch gekennzeichnet, dass** über die gelichfalls angedockten Steuerungsleitungen (9) Informationen von der "Haussteuerung" über den Bedarf an Wärme und Strom an die "Motorsteuerung" geliefert werden, und dass die "Motorsteuerung" an die "Haussteuerung" Informationen liefert, wie: Störung, Wartungsintervall, Betriebsstunden, abgegebene el. Leistung, Treibstoffvorrat und dgl.

8. Verfahren nach einem der Ansprüche 1 bis 7, **dadurch gekennzeichnet, dass** mindestens eine mobile Kraft-Wärme-Kopplung mit dessen Batterie, als Puffer an das öffentliche Versorgungsnetz angeschlossen wird.

9. Vorrichtung zum Betrieb eines straßentauglichen Hybridfahrzeuges (2) an der Haustechnik eines Gebäudes mit einer Andockstation (5), welche die Medien- und Steuerleitungen des Hybridfahrzeuges mit dem Gebäude verbindet, **dadurch gekennzeichnet, dass** die Andockstation (5) aus einer fahrzeugseitigen und einer gebäudeseitigen Andockschiene (3, 4) besteht.

10. Vorrichtung nach Anspruch 9, **dadurch gekennzeichnet, dass** über die Andockstation (5) mindestens eine Stromzu- und Ableitung vom Fahrzeug in das Haus erfolgt, sowie eine Ableitung vom Kühlwasserzu- und -ablauf in das Haus, um von dem Hybridfahrzeug eine entsprechende Wärmeleistung in Form eines Warmwasserstroms der Haustechnik zuzuführen.

11. Vorrichtung nach einem der Ansprüche 9 bis 10 zur Ausübung des Verfahrens nach einem oder mehreren der Ansprüche 1 bis 8, **dadurch gekennzeichnet, dass** die fahrzeugseitige Andockschiene (3) an der Frontseite des Fahrzeuges angeordnet ist.

12. Vorrichtung nach einem der Ansprüche 9 bis 11, **dadurch gekennzeichnet, dass** die Radführung (1) aus zwei Auffahrschienen besteht, auf welche das Hybridfahrzeug (2) auffährt und mit den Rädern so geführt ist, dass seine fahrzeugseitige Andockschiene (3) über die fahrzeugseitig angeordneten Schnellkupplungshälften mit den Schnellkupplungshälften an der stationär angeordneten Andockschiene (4) koppelbar ist.

13. Vorrichtung nach einem der Ansprüche 9 bis 12, **dadurch gekennzeichnet, dass** die Schnellkupplungen (11) der Andockstation (5) gas- und flüssigkeitsdichte Verbindungen mit den Medienleitungen des Fahrzeuges in Richtung auf die Haustechnik ausbilden.

14. Vorrichtung nach einem der Ansprüche 9 bis 13, **dadurch gekennzeichnet, dass** beim Antrieb des Generators/Motors (14) über den Verbrennungsmotor (12) der Generator (14) Strom erzeugt, der über die Stromzu- und -ableitungen (8) und die Andockstation (5) in die Haustechnik hineingeliefert wird.

15. Vorrichtung nach einem der Ansprüche 9 bis 14, **dadurch gekennzeichnet, dass** in den auf der Hausseite angeordneten Wärmetauscher (20) die hausseitigen Kühlwasserzu- und -abläufe einmünden, und dass auf der Sekundärseite Vorlauf- und Rücklaufleitungen (21, 22) gebildet werden, die einen Warmwasserspeicher (23) aufladen.
